# EUROPEAN PATENT APPLICATION

(11) **EP 3 346 555 A1**
(43) Date of publication of application: **11.07.2018**
(21) Application number: 17202485.3
(22) Date of filing: 20.11.2017
(51) Int. Cl.: H01R 12/78, H01R 12/77, H01R 12/88, G06F 1/16

(54) **TRANSFER MODULE AND ELECTRONIC DEVICE**

(30) Priority: 05.01.2017 TW 106100273
(71) Applicant: Acer Incorporated, New Taipei City 221 (TW)
(72) Inventor: WANG, Yu-Shih, Taiwan, R.O.C. New Taipei City 221 (TW); HUANG, Yi-Ta, Taiwan, R.O.C. New Taipei City 221 (TW)
(74) Representative: Haseltine Lake LLP

(57) **Abstract**

A transfer module is adapted to be disposed in a base of an electronic device. The base includes a keyboard member and a motherboard including a connector. The transfer module includes a transfer connector and a flexible circuit board. The transfer connector is located between the keyboard member and the motherboard. The flexible circuit board is located between the transfer connector and the motherboard. The flexible circuit board has a first side and a second side opposite to each other, and the keyboard member has a connecting side. The first side of the flexible circuit board is electrically connected to the connector of the motherboard. The second side of the flexible circuit board and the connecting side of the keyboard member are interposed in the transfer connector. The keyboard member is electrically connected to the motherboard through the transfer connector and the flexible circuit board.

## Description

### BACKGROUND OF THE INVENTION

### [Field of the Invention]

The invention relates to a transfer module and an electronic device, particularly a transfer module that is capable of transiting elements of two different system specifications and an electronic device that includes the transfer module.

### [Description of Related Art]

Regular notebook computers mostly consist of a machine body and a display screen, wherein the machine body and the display screen are pivoted to each other. Users may fold up the machine body and the display screen of a notebook computer to make the computer portable through a relative rotation performed between the machine body and the display screen. When using the notebook computer, users may unfold the display screen for easier use.

When researching and developing notebook computers, manufacturers wish to effectively reduce manufacturing costs through sharing the system motherboard. In the existing notebook computer systems, sharing motherboard is mostly achieved by increasing the number of board members to enlarge the motherboard. The method mentioned above, however, results in the inevitable increase in the length of the keyboard member in order to accommodate the location of the keyboard to the location of the connector on the motherboard. It further leads to difficulty when preparing the materials and the inability to increase the trading volume. Thereby, the goal of effectively reducing manufacturing costs cannot be achieved.

### SUMMARY OF THE INVENTION

The invention provides a transfer module capable of transiting elements of two different system specifications to reduce manufacturing costs.

The invention also provides an electronic device including the transfer module.

The transfer module of the invention is adapted to be configured in a base of an electronic device. The base includes a keyboard member and a motherboard. The motherboard includes a connector. The transfer module includes a transfer connector and a flexible circuit board. The transfer connector is located between the keyboard member and the motherboard. The flexible circuit board is located between the transfer connector and the motherboard. The flexible circuit board has a first side and a second side opposite to each other. The keyboard member has a connecting side. The first side of the flexible circuit board is electrically connected to the connector of the motherboard. The second side of the flexible circuit board and the connecting side of the keyboard member are interposed in the transfer connector. The keyboard member is electrically connected to the motherboard through the transfer connector and the flexible circuit board.

In an embodiment of the invention, a length of the flexible circuit board has a positive correlation with a horizontal distance between the connector of the motherboard and the connecting side of the keyboard member.

In an embodiment of the invention, the transfer connector includes an upper cover and a lower cover pivoted to the upper cover. The connecting side of the keyboard member is stacked on the second side of the flexible circuit board. The connecting side of the keyboard member and the second side of the flexible circuit board are interposed between the upper cover and the lower cover.

In an embodiment of the invention, the upper cover of the transfer connector includes a plurality of openings separated from one another and a plurality of elastic elements disposed corresponding to the openings. Both ends of each of the elastic elements are respectively bridged over two opposite sides of the corresponding opening.

In an embodiment of the invention, the second side of the flexible circuit board includes a plurality of first goldfingers. The connecting side of the keyboard member includes a plurality of second goldfingers contacting the first goldfingers respectively. The elastic elements are respectively disposed corresponding to the second goldfingers. Each of the elastic elements includes a contact point abutted against a back surface of the corresponding second goldfinger.

The electronic device of the invention includes a display unit, a base, and a transfer module. The base is pivoted to the display unit. The base includes a keyboard member and a motherboard. The motherboard includes a connector. The transfer module is configured in the base and the transfer module includes a transfer connector and a flexible circuit board. The transfer connector is located between the keyboard member and the motherboard. The flexible circuit board is located between the transfer connector and the motherboard. The flexible circuit board has a first side and a second side opposite to each other, and the first side of the flexible circuit board is electrically connected to the connector of the motherboard. The keyboard member includes a connecting side. The second side of the flexible circuit board and the connecting side of the keyboard member are interposed in the transfer connector. The keyboard member is electrically connected to the motherboard through the transfer connector and the flexible circuit board.

In an embodiment of the invention, a length of the flexible circuit board has a positive correlation with a horizontal distance between the connector of the motherboard and the connecting side of the keyboard member.

In an embodiment of the invention, the transfer connector includes an upper cover and a lower cover pivoted to the upper cover. The connecting side of the keyboard member is stacked on the second side of the flexible circuit board. The connecting side of the keyboard member and the second side of the flexible circuit board are interposed between the upper cover and the lower cover.

In an embodiment of the invention, the upper cover of the transfer connector includes a plurality of openings separated from one another and a plurality of elastic elements disposed corresponding to the openings. Both ends of each of the elastic elements are respectively bridged over two opposite sides of the corresponding opening.

In an embodiment of the invention, the second side of the flexible circuit board includes a plurality of first goldfingers. The connecting side of the keyboard member includes a plurality of second goldfingers contacting the first goldfingers respectively. The elastic elements are respectively disposed corresponding to the second goldfingers. Each of the elastic elements includes a contact point abutted against a back surface of the corresponding second goldfinger.

Based on the above, the transfer module of the invention is configured to transit keyboard members and motherboards of different system specifications. The second side of the flexible circuit board and the connecting side of the keyboard member are interposed in the transfer connector. The keyboard member is electrically connected to the motherboard through the transfer connector and the flexible circuit board. In comparison with the conventional art which requires increasing the number of the board members on the motherboard and the length of the keyboard member according to different system specifications, the transfer module of the invention is able to transit two elements of different system specifications without changing the design of the keyboard member and the motherboard. Thus the manufacturing costs are effectively reduced.

To make the aforementioned and other features and advantages of the invention more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate exemplary embodiments of the invention and, together with the description, serve to explain the principles of the invention.
FIG. 1 is a diagram of an electronic device in an embodiment of the invention.
FIG. 2A is a diagram of a transfer module of the electronic device in FIG. 1.
FIG. 2B is a diagram of a transfer connector of the transfer module in FIG. 2A.
FIG. 2C is a schematic enlarged view of a portion of an upper cover of the transfer connector in FIG. 2B.
FIGs. 3A to 3C are schematic exploded views of assembling processes to connect the transfer module in FIG. 1 between a motherboard and a keyboard member.
FIG. 4 is a schematic cross-sectional view of a portion of the transfer connector in FIG. 1, a flexible circuit board, and a keyboard member.

### DESCRIPTION OF THE EMBODIMENTS

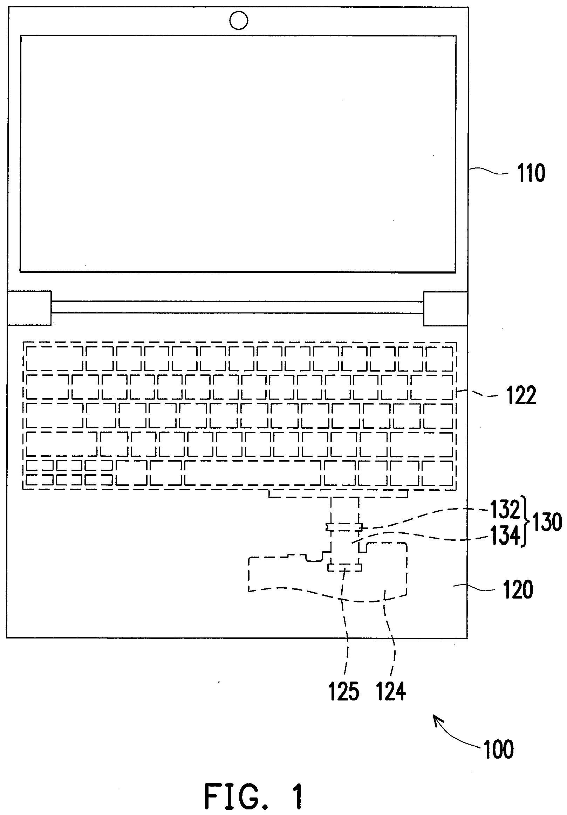

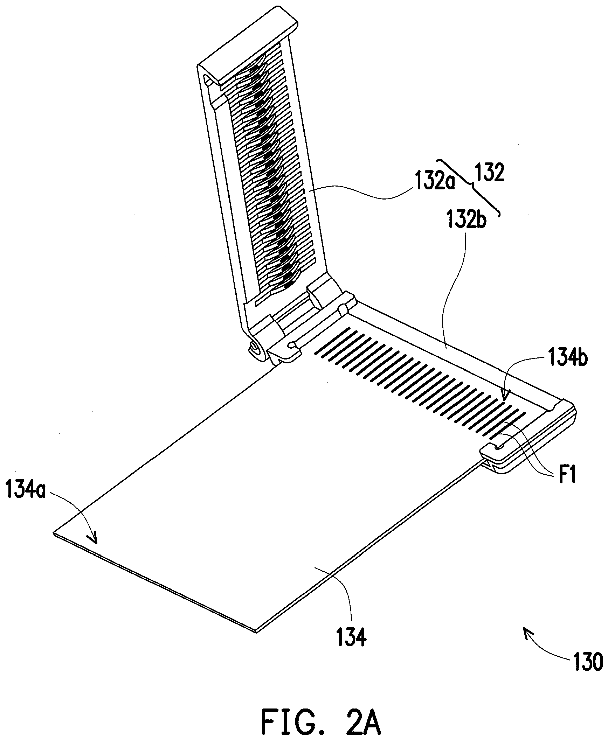

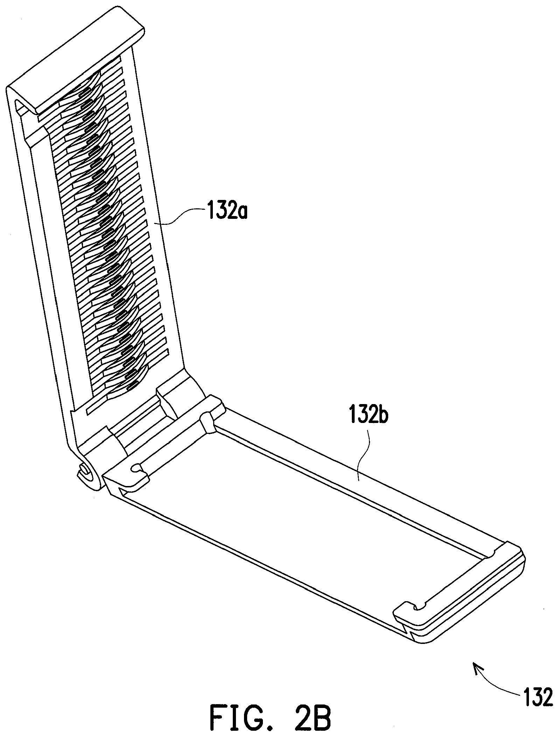

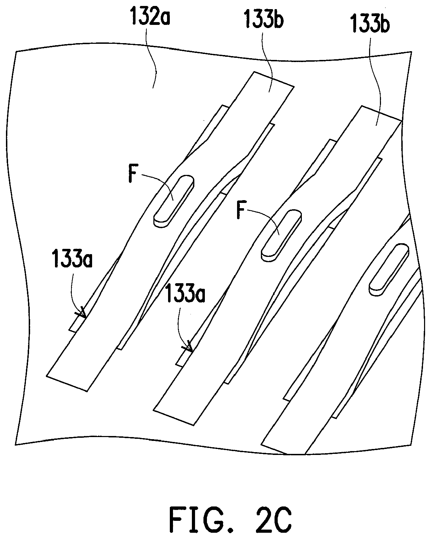

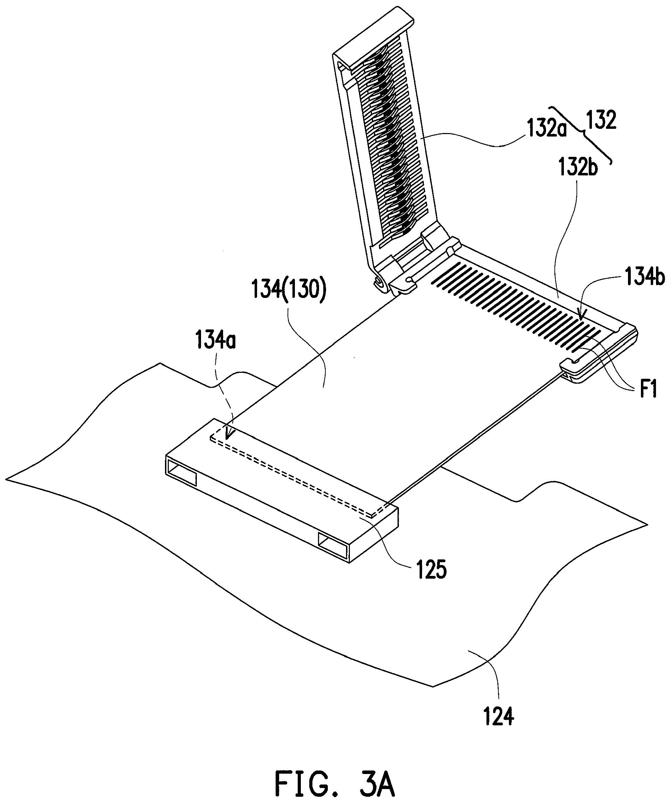

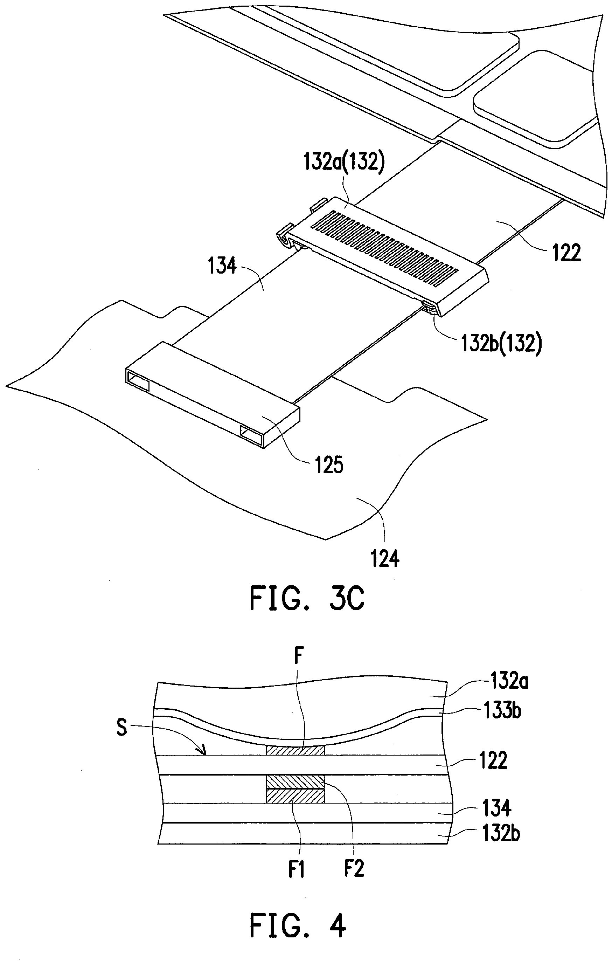

FIG. 1 is a diagram of an electronic device in an embodiment of the invention. FIG. 2A is a diagram of a transfer module of the electronic device in FIG. 1. FIG. 2B is a diagram of a transfer connector of the transfer module in FIG. 2A. FIG. 2C is a schematic enlarged view of a portion of an upper cover of the transfer connector in FIG. 2B. FIGs. 3A to 3C are schematic exploded views of assembling processes to connect the transfer module in FIG. 1 between a motherboard and a keyboard member. FIG. 4 is a schematic cross-sectional view of a portion of the transfer connector in FIG. 1, a flexible circuit board, and a keyboard member. For the convenience of explaining the invention, some members of the base in FIG. 1 are not shown in the diagram, and the configuration of members in the base is illustrated with dotted lines.

Please refer to FIG. 1. An electronic device 100 of the embodiment includes a display unit 110, a base 120, and a transfer module 130. Here, the electronic device 100 is a notebook computer, the display unit 110 is a display screen of the notebook computer, and the base 120 is a base of the notebook computer, for example. The base 120 is pivoted to the display unit 110. The embodiment, however, does not limit the type of the electronic device 100. In other embodiments that are not shown in this specification, the electronic device may be a combination of a tablet computer and an augmented base of the tablet computer.

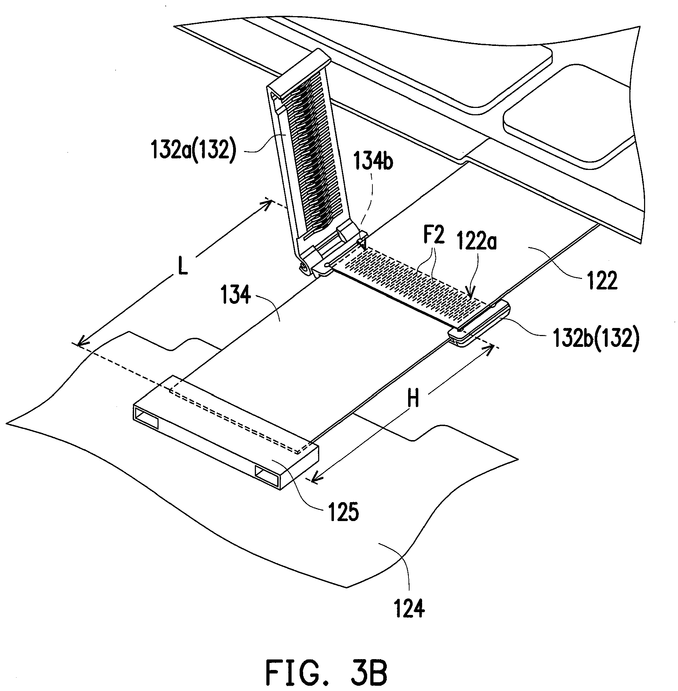

Please refer to FIG. 1, FIG. 3A, FIG. 3B, and FIG. 3C altogether. The base 120 in the embodiment of the invention includes a keyboard member 122 and a motherboard 124. The motherboard 124 includes a connecter 125. The transfer module 130 is configured in the base 120 and the transfer module 130 includes a transfer connector 132 and a flexible circuit board 134. The transfer connector 132 is located between the keyboard member 122 and the motherboard 124. The flexible circuit board 134 is located between the transfer connector 132 and the motherboard 124. The flexible circuit board 134 has a first side 134a and a second side 134b opposite to each other. The keyboard member 122 has a connecting side 122a. The first side 134a of the flexible circuit board 134 is electrically connected to the connector 125 of the motherboard 124. The second side 134b of the flexible circuit board 134 and the connecting side 122a of the keyboard member 122 are interposed in the transfer connector 132. The keyboard member 122 is electrically connected to the motherboard 124 through the transfer connector 132 and the flexible circuit board 134.

Please refer to FIG. 2A, FIG. 2B and FIG. 2C altogether. To be more detailed, the transfer connector 132 of the transfer module 130 in the embodiment of the invention includes an upper cover 132a and a lower cover 132b pivoted to the upper cover 132a. The upper cover 132a of the transfer connector 132 has a plurality of openings 133a separated from one another and a plurality of elastic elements 133b disposed corresponding to the openings 133a. Both ends of each of the elastic elements 133b are respectively bridged over two opposite sides of the corresponding opening 133a. Each of the elastic elements 133b has a contact point F. The second side 134b of the flexible circuit board 134 is configured on the lower cover 132b, wherein the second side 134b of the flexible circuit board 134 has a plurality of first goldfingers F1. The first goldfingers F1 are separated from one another.

Please refer to FIG. 3A. When assembling, the first side 134a of the flexible circuit board 134 is electrically connected to the connector 125 of the motherboard 124 first. The flexible circuit board 134 is electrically connected to the connector 125 of the motherboard 124 through, for instance, plugging. Then, the second side 134b of the flexible circuit board 134 is disposed on the lower cover 132b of the transfer connector 132.

Please refer to FIG. 3B and FIG. 4 together. Afterwards, the connecting side 122a of the keyboard member 122 is stacked on the second side 134b of the flexible circuit board 134. The connecting side 122a of the keyboard member 122 has a plurality of second goldfingers F2. The second goldfingers F2 are separated from one another, contacting the first goldfingers F1 respectively. In other words, the number of the second goldfingers F2 equals the number of the first goldfingers F1. The second goldfingers F2 are configured corresponding to the first goldfingers F1.

Please refer to FIG. 3C and FIG. 4 together. Last, the upper cover 132a of the transfer connector 132 is engaged with the lower cover 132b. Thereby, the connecting side 122a of the keyboard member 122 and the second side 134b of the flexible circuit board 134 are interposed between the upper cover 132a and the lower cover 132b. That is to say, the connecting side 122a of the keyboard member 122 and the second side 134b of the flexible circuit board 134 are interposed in the transfer connecter 132. Meanwhile, the elastic elements 133b are configured corresponding to the second goldfingers F2 respectively. Each of the contact points F is abutted against a back surface S of the corresponding second goldfinger F2. As a result, the contact points F of the elastic elements 133b provide a normal force to urge the goldfingers F2 on the keyboard member 122 to be electrically conducted with the first goldfingers F1 on the flexible circuit board 134. The keyboard member 122 is electrically connected to the motherboard 124 through the transfer connector 132 and the flexible circuit board 134.

Particularly, a length L of the flexible circuit board 134 in the embodiment of the invention has a positive correlation with a horizontal distance H between the connector 125 of the motherboard 124 and the connecting side 122a of the keyboard member 122. That is to say, the length L of the flexible circuit board 134 is directly proportional to the horizontal distance H between the connector 125 of the motherboard 124 and the connecting side 122a of the keyboard member 122. In other words, the length L of the flexible circuit board 134 in this embodiment is not fixed and may be adjusted according to the horizontal distance H between the connector 125 of the motherboard 124 and the connecting side 122a of the keyboard member 122. Through coordinating the length of the flexible circuit board 134 and the transfer connecter 132, the keyboard member 122 of different sizes may be applied without changing the size of the motherboard 124. Thereby, the goal of sharing the motherboard 124 of the same size in the electronic device 100 of different sizes is easily achieved.

In short, the transfer module 130 of this embodiment includes the transfer connector 132 and the flexible circuit board 134. The second side 134b of the flexible circuit board 134 and the connecting side 122a of the keyboard member 122 are interposed in the transfer connector 132. The keyboard member 122 is electrically connected to the motherboard 124 through the transfer connector 132 and the flexible circuit board 134. As a result, the transfer module 130 in the embodiment of the invention is able to transit two elements of different system specifications without changing the designs of the keyboard member 122 and the motherboard 124. The manufacturing costs are thus effectively reduced. Furthermore, since the electronic device 100 in the embodiment of the invention includes the transfer module 130, the manufacturing costs are also effectively reduced and the goal of sharing the motherboard 124 of the same size in the electronic device 100 of different sizes is easily achieved.

Based on the above, the transfer module of the invention is configured to transit keyboard members and motherboards of different system specifications. The second side of the flexible circuit board and the connecting side of the keyboard member are interposed in the transfer connector. The keyboard member is electrically connected to the motherboard through the transfer connector and the flexible circuit board. In comparison with the conventional art which requires increasing the number of the board members on the motherboard and the length of the keyboard member according to different system specifications, the transfer module of the invention is able to transit two elements of different system specifications without changing the design of the keyboard member and the motherboard. Thus the manufacturing costs are effectively reduced.

## Claims

1. A transfer module (130) adapted to be disposed in a base (120) of an electronic device (100), the base (120) comprising a keyboard member (122) and a motherboard (124), the motherboard (124) comprising a connector (125), the transfer module (130) comprising:
a transfer connector (132) located between the keyboard member (122) and the motherboard (124); and
a flexible circuit board (134) located between the transfer connector (132) and the motherboard (124), the flexible circuit board (134) comprising a first side (134a) and a second side (134b) opposite to each other and the keyboard member (122) comprising a connecting side (122a), wherein the first side (134a) of the flexible circuit board (134) is electrically connected to the connector (125) of the motherboard (124), and the second side (134b) of the flexible circuit board (134) and the connecting side (122a) of the keyboard member (122) are interposed in the transfer connector (132), and the keyboard member (122) is electrically connected to the motherboard (124) through the transfer connector (132) and the flexible circuit board (134).

2. The transfer module (130) as recited in claim 1, wherein a length (L) of the flexible circuit board (134) has a positive correlation with a horizontal distance (H) between the connector (125) of the motherboard (124) and the connecting side (122a) of the keyboard member (122).

3. The transfer module (130) as recited in claim 1, wherein the transfer connector (132) comprises an upper cover (132a) and a lower cover (132b) pivoted to the upper cover (132a), and the connecting side (122a) of the keyboard member (122) is stacked on the second side (134b) of the flexible circuit board (134), and the connecting side (122a) of the keyboard member (122) and the second side (134b) of the flexible circuit board (134) are interposed between the upper cover (132a) and the lower cover (132b).

4. The transfer module (130) as recited in claim 3, wherein the upper cover (132a) of the transfer connector (132) comprises a plurality of openings (133a) separated from one another and a plurality of elastic elements (133b) disposed corresponding to the openings (133a), and both ends of each of the elastic elements (133b) are respectively bridged over two opposite sides of the corresponding opening (133a).

5. The transfer module (130) as recited in claim 4, wherein the second side (134b) of the flexible circuit board (134) comprises a plurality of first goldfingers (F1), and the connecting side (122a) of the keyboard member (122) comprises a plurality of second goldfingers (F2) contacting the first goldfingers (F1) respectively, and the elastic elements (133b) are respectively configured corresponding to the second goldfingers (F2), and each of the elastic elements (133b) comprises a contact point (F) abutted against a back surface (S) of the corresponding second goldfinger (F2).

6. An electronic device (100), comprising:
a display unit (110);
a base (120) pivoted to the display unit (110), the base (120) comprising:
a keyboard member (122); and
a motherboard (124) comprising a connector (125); and
a transfer module (130) configured in the base (120), the transfer module (130) comprising:
a transfer connector (132) located between the keyboard member (122) and the motherboard (124); and
a flexible circuit board (134) located between the transfer connector (132) and the motherboard (124), the flexible circuit board (134) comprising a first side (134a) and a second side (134b) opposite to each other, and the keyboard member (122) comprising a connecting side (122a), wherein the first side (134a) of the flexible circuit board (134) is electrically connected to the connector (125) of the motherboard (124), and the second side (134b) of the flexible circuit board (134) and the connecting side (122a) of the keyboard member (122) are interposed in the transfer connector (132), and the keyboard member (122) is electrically connected to the motherboard (124) through the transfer connector (132) and the flexible circuit board (134).

7. The electronic device (100) as recited in claim 6, wherein a length (L) of the flexible circuit board (134) has a positive correlation with a horizontal distance (H) between the connector (125) of the motherboard (124) and the connecting side (122a) of the keyboard member (122).

8. The electronic device (100) as recited in claim 6, wherein the transfer connector (132) comprises an upper cover (132a) and a lower cover (132b) pivoted to the upper cover (132a), and the connecting side (122a) of the keyboard member (122) is stacked on the second side (134b) of the flexible circuit board (134), and the connecting side (122a) of the keyboard member (122) and the second side (134b) of the flexible circuit board (134) are interposed between the upper cover (132a) and the lower cover (132b).

9. The electronic device (100) as recited in claim 8, wherein the upper cover (132a) of the transfer connector (132) comprises a plurality of openings (133a) separated from one another and a plurality of elastic elements (133b) disposed corresponding to the openings (133a), and both ends of each of the elastic elements (133b) are respectively bridged over two opposite sides of the corresponding opening (133a).

10. The electronic device (100) as recited in claim 9, wherein the second side (134b) of the flexible circuit board (134) comprises a plurality of first goldfingers (F1), and the connecting side (122a) of the keyboard member (122) comprises a plurality of second goldfingers (F2) contacting the first goldfingers (F1) respectively, and the elastic elements (133b) are respectively disposed corresponding to the second goldfingers (F2), and each of the elastic elements (133b) comprises a contact point (F) abutted against a back surface (S) of the corresponding second goldfinger (F2).
